# EUROPEAN PATENT APPLICATION

(11) **EP 3 882 584 A1**
(43) Date of publication of application: **22.09.2021**
(21) Application number: 21163210.4
(22) Date of filing: 17.03.2021
(51) Int. Cl.: G01G 15/00, G01G 17/00, G01G 19/03

(54) **WEIGHT CHECKING DEVICE**

(30) Priority: 19.03.2020 JP 2020049459
(71) Applicant: ISHIDA CO., Ltd., Kyoto-shi, Kyoto 606-8392 (JP)
(72) Inventor: YAMAKAWA, Atsushi, Ritto-shi, Shiga 520-3026 (JP); SUGIUCHI, Hajime, Ritto-shi, Shiga 520-3026 (JP)
(74) Representative: Global IP Europe Patentanwaltskanzlei

(57) **Abstract**

It is an object of this invention to provide a weight checking device that ensures that the user can appropriately carry out settings relating to the operation of the device.

A weight checker 30 (weight checking device) performs checks relating to weights of products P (articles-to-be-checked). The weight checker includes a load cell 33 (weighing unit), a touch panel 37 (receiving unit), and a control unit 39. The load cell weighs the weights of the products. The touch panel receives requests to change parameters relating to the operation of the weight checker. The control unit determines, based on at least one of conditions permitted for the weight checker and conditions relating to the checks, whether or not the parameters after the changes pertaining to the change requests are in predetermined allowable ranges and, in accordance with the determination results, outputs predetermined determination information or decides whether or not to change the parameters based on the change requests.

## Description

### BACKGROUND

### TECHNICAL FIELD

This invention relates to a weight checking device that performs checks relating to weights of articles-to-be-checked.

### BACKGROUND ART

Conventionally, on production lines having a process that sorts products in accordance with their weights, a weight checking device that checks whether or not the weights of the products are in a predetermined range has been installed. For example, patent document 1 (JP 2006-322750 A) discloses a weight checking device that conveys products that are articles-to-be-checked, simultaneously weighs their weights, and sorts the articles-to-be-checked in accordance with their weights into conforming products and nonconforming products.

### SUMMARY OF INVENTION

### <Technical Problem>

However, in a weight checking device having a function with which the user can change parameters relating to the operation of the device, there is the concern that the user will make changes to the parameters that depart from predetermined allowable ranges that are based on the weighing accuracy of the weights and the yield resulting from the checks, for example.

It is an object of this invention to provide a weight checking device that ensures that the user can appropriately carry out settings relating to the operation of the device.

### <Solution to Problem>

A weight checking device pertaining to a first aspect of the invention performs a check relating to a weight of an article-to-be-checked. The weight checking device includes a weighing unit, a receiving unit, and a control unit. The weighing unit is configured to weigh the weight of the article-to-be-checked. The receiving unit is configured to receive a change request of a parameter relating to an operation of the weight checking device. The control unit is configured to determine, based on at least one of a condition permitted for the weight checking device and a condition relating to the check, whether or not the parameter after a change pertaining to the change requests is in a predetermined allowable range and, in accordance with the determination result, output predetermined determination information or decide whether or not to change the parameter based on the change request.

The weight checking device pertaining to the first aspect can ensure that the parameters relating to the operation of the device are appropriately set by the user.

A weight checking device pertaining to a second aspect of the invention is the weight checking device pertaining to the first aspect, wherein the condition permitted for the weight checking device is a condition specified by a provisions of a law.

The weight checking device pertaining to the second aspect can appropriately set the allowable ranges of the parameters relating to the operation of the device.

A weight checking device pertaining to a third aspect of the invention is the weight checking device pertaining to the first aspect or the second aspect, wherein in a case where the parameter after the change pertaining to the change request is not in the allowable range, the control unit is configured to output the determination information including a warning.

The weight checking device pertaining to the third aspect can, in a case where values after the changes to the parameters relating to the operation of the device are outside the allowable ranges, notify the user of a warning to that effect.

A weight checking device pertaining to a fourth aspect of the invention is the weight checking device pertaining to any one of the first aspect to the third aspect, wherein in a case where the parameter after the change pertaining to the change request is not in the allowable range, the control unit is configured to associate and store, with the determination result, an indication that the parameter after the change pertaining to the change request is not in the allowable range.

The weight checking device pertaining to the fourth aspect can, in a case where the user has changed the parameters relating to the operation of the device, automatically save information relating to the changes, such as the parameters that the user has changed.

A weight checking device pertaining to a fifth aspect of the invention is the weight checking device pertaining to any one of the first aspect to the fourth aspect, wherein in a case where the parameter after the change pertaining to the change request is not in the allowable range, the control unit is configured to restrict the change to the parameter pertaining to the change request.

The weight checking device pertaining to the fifth aspect can prohibit changes to the parameters in a case where values after the changes to the parameters relating to the operation of the device are outside the allowable ranges.

A weight checking device pertaining to a sixth aspect of the invention is the weight checking device pertaining to any one of the first aspect to the fifth aspect, further including a conveyance unit configured to convey the article-to-be-checked in a predetermined direction. The receiving unit is configured to receive a change request of the parameter including at least one of a speed at which the conveyance unit conveys the article-to-be-checked and the range of the weight that the weighing unit is capable of weighing.

The weight checking device pertaining to the sixth aspect can ensure that the parameters relating to the operation of the device are appropriately set by the user.

A weight checking device pertaining to a seventh aspect of the invention is the weight checking device pertaining to any one of the first aspect to the sixth aspect, wherein the receiving unit is configured to receive a change request of at least some of the parameter per each type of the article-to-be-checked.

The weight checking device pertaining to the seventh aspect ensures that the user can set the parameters relating to the operation of the device per each type of the articles-to-be-checked that are the object of the checking.

A weight checking device pertaining to an eighth aspect of the invention is the weight checking device pertaining to any one of the first aspect to the seventh aspect, wherein the control unit is configured to decide the allowable range based on a result of a test run performed after installation of the weight checking device.

The weight checking device pertaining to the eighth aspect can appropriately set the allowable ranges of the parameters relating to the operation of the device.

### <Advantageous Effects of Invention>

The weight checking device pertaining to this invention ensures that the user can appropriately carry out settings relating to the operation of the device.

### BRIEF DESCRIPTION OF DRAWINGS

FIG. 1 is an overall view showing the configuration of a production system including a weight checker pertaining to an embodiment of the invention;
FIG. 2 is a block diagram showing devices that configure the production system of FIG. 1;
FIG. 3 is a perspective view showing the configuration of the weight checker included in the production system of FIG. 1;
FIG. 4 is a plan view showing the configuration of a sorting mechanism of FIG. 3;
FIG. 5 is an example of a home screen displayed on a touch panel;
FIG. 6 is an example of a settings list screen displayed on the touch panel;
FIG. 7 is an example of an operating parameter setting screen displayed on the touch panel;
FIG. 8 is an example of a standard value setting screen displayed on the touch panel;
FIG. 9 is an example of a standard value input screen in a case where the value of a "Settings Restriction Mode" is "OFF";
FIG. 10 is an example of the standard value input screen in a case where the value of the "Settings Restriction Mode" is "ON" and the value of a "Restriction Departure Mode" is "Prohibited";
FIG. 11 is an example of the standard value input screen in a case where the value of the "Settings Restriction Mode" is "ON" and the value of the "Restriction Departure Mode" is "Warning";
FIG. 12 is the standard value input screen of FIG. 11 in which warnings are displayed;
FIG. 13 is an example of a screen that displays a list of operating parameters that are outside allowable ranges in a reservation number to which the user has switched; and
FIG. 14 is an example of a screen that displays a list of operating parameters that are outside allowable ranges at the start of the operation of the weight checker.

### DESCRIPTION OF EMBODIMENTS

An embodiment of the invention will now be described with reference to the drawings. The embodiment described below is a specific example of the invention and is not intended to limit the technical scope of the invention.

### (1) Configuration of Production System 100

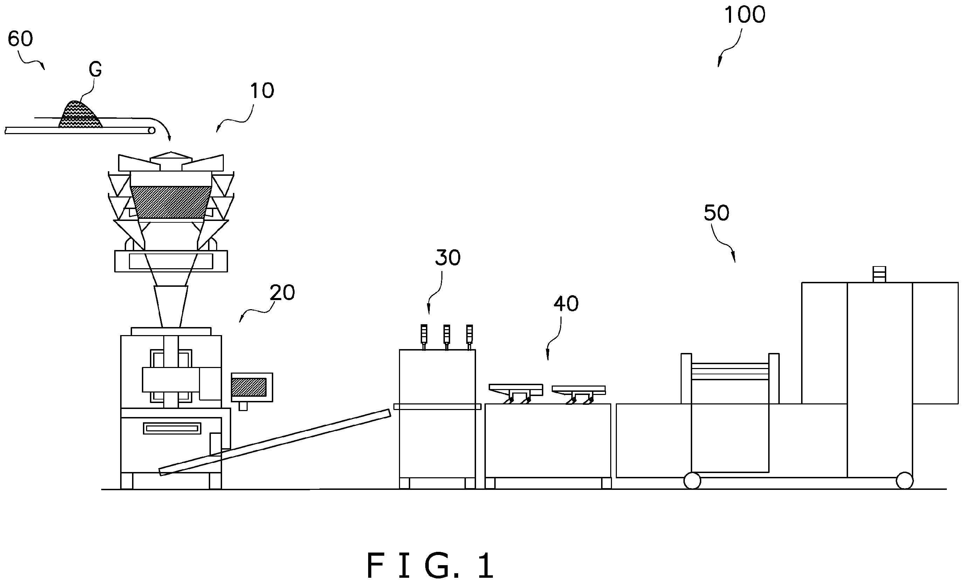

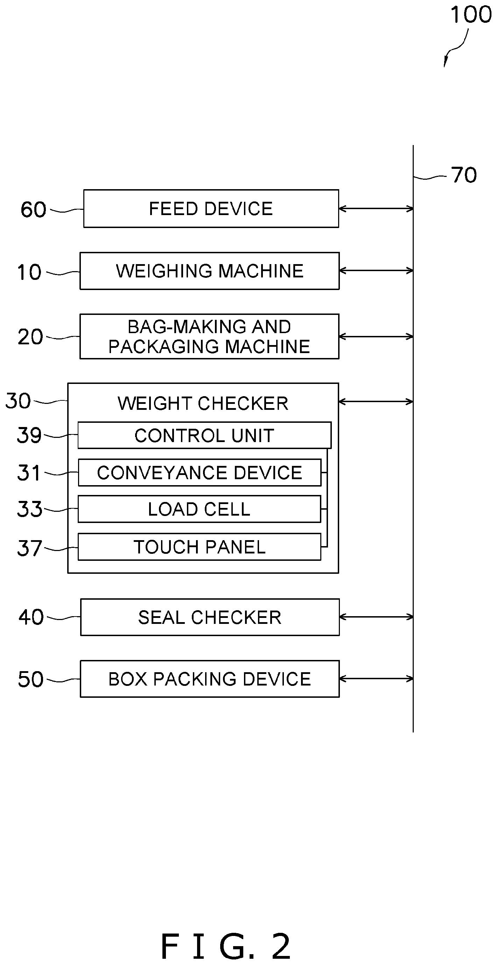

As shown in FIG. 1 and FIG. 2, a production system 100 has a production line including a weighing machine 10, a bag-making and packaging machine 20, a weight checker 30, a seal checker 40, a box packing device 50, and a feed device 60. The weight checker 30 corresponds to a weight checking device that is an embodiment of the invention.

The weighing machine 10, the bag-making and packaging machine 20, the weight checker 30, the seal checker 40, and the box packing device 50 are connected to each other by conveyors, for example, and operate in close cooperation with each other to perform the work of weighing, packaging, and shipping goods G that are fed from the feed device 60. As shown in FIG. 2, the weighing machine 10, the bag-making and packaging machine 20, the weight checker 30, the seal checker 40, the box packing device 50, and the feed device 60 are connected to each other via a communication line 70 and send and receive various signals, data and the like to and from each other.

The weighing machine 10 receives the goods G that are fed from the feed device 60, weighs the weights of the goods G, and discharges the goods G. In a case where the weighing machine 10 has a plurality of weigh hoppers, the weighing machine 10 performs a combination calculation using the weighing results of each of the weigh hoppers. Specifically, the weighing machine 10 selects a combination of the weigh hoppers in which the total weight obtained by combining the weighing results of the goods G that have been input to each of the weigh hoppers falls in a predetermined target range. Then, the weighing machine 10 discharges and collects the goods G from the selected combination of the weigh hoppers and weighs the goods G whose weight is in the predetermined target range. In this case, the weighing machine 10 has a dispersion table, plural vibration feeders, and plural pool hoppers. The dispersion table vibrates, whereby it radially disperses the good G. The vibration feeders are radially disposed around the dispersion table. The pool hoppers are disposed in a circle, temporarily retain the goods G that have dropped from the vibration feeders, and input the goods G to the weigh hoppers disposed under each of the pool hoppers.

The bag-making and packaging machine 20 receives and packages in bags the goods G that have been weighed and discharged by the weighing machine 10. The bag-making and packaging machine 20 mainly has a folding mechanism, a longitudinal sealing mechanism, a feed mechanism, a cutting mechanism, and a transverse sealing mechanism. The folding mechanism folds a film sheet pulled out from a film roll so that the edge portions on both sides thereof overlap each other. The longitudinal sealing mechanism heat-fuses the overlapping portion of the folded film sheet to thereby form a tube. The feed mechanism conveys the tube a predetermined dimension in its lengthwise direction in a state in which the tube is sandwiched in its width direction. The cutting mechanism cuts the tube to a predetermined size. The transverse sealing mechanism seals the cut end of the tube after the cutting to form bags. In the bag-making and packaging machine 20, the goods G that have been discharged from the weighing machine 10 are input to the inside of the tube while the tube is being conveyed by the feed mechanism.

The goods G that have been weighed by the weighing machine 10 and packaged by the bag-making and packaging machine 20 become products (articles-to-be-checked) P, and the weight checker 30, the seal checker 40, and the box packing device 50 perform various checks of the products P and the work of box packing the checked products P. The weight checker 30 performs checks as to whether or not the weights of the goods G that have been weighed by the weighing machine 10 are in a predetermined range. The seal checker 40 performs checks of the sealed portions of the bags to ascertain whether or not the bags in which the goods G have been packaged by the bag-making and packaging machine 20 are sealed. The box packing device 50 packs in cardboard boxes the products P that have been determined to be conforming products by the weight checker 30 and the seal checker 40.

The feed device 60 mainly includes a feed conveyor and a drive mechanism. The feed conveyor is, for example, an endless belt conveyor. The feed conveyor is rotated by the drive mechanism, whereby the goods G that have been placed on the feed conveyor are conveyed onto the dispersion table of the weighing machine 10.

### (2) Configuration of Weight Checker 30

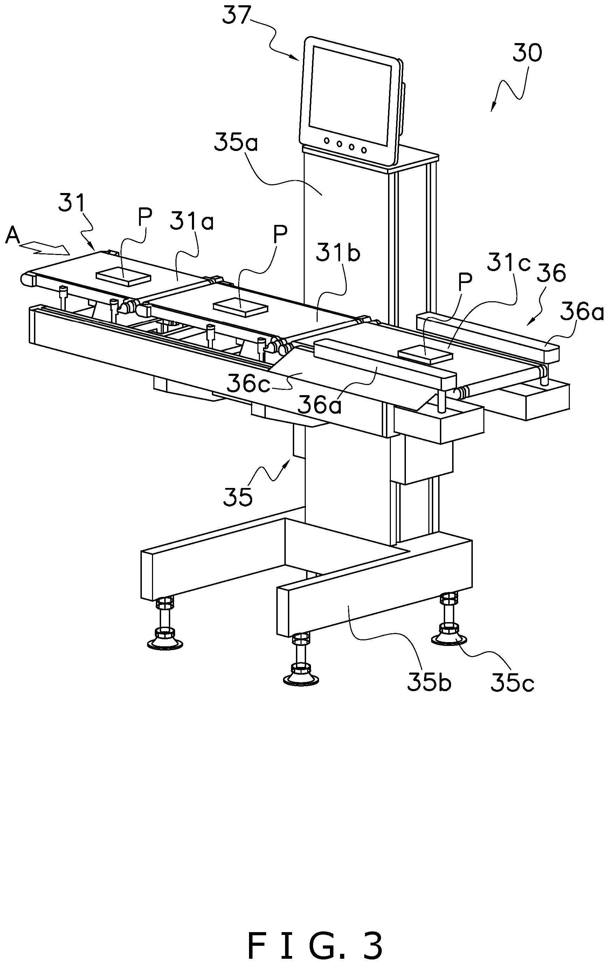

As shown in FIG. 2 and FIG. 3, the weight checker (weight checking device) 30 mainly has a conveyance device (conveyance unit) 31, a load cell (weighing unit) 33, a support 35, a touch panel (receiving unit) 37, and a control unit 39. The weight checker 30 conveys the products P, which are the goods G that have been packaged, along a conveyance direction A, simultaneously weighs the weights of the products P, and, in accordance with the weighing results, performs determinations as to whether the products P are conforming products or nonconforming products. The weight checker 30 selects only the products P determined to be conforming products and conveys them to the seal checker 40 that is disposed downstream.

### (2-1) Conveyance Device 31

As shown in FIG. 3, the conveyance device 31 has a first conveyance unit 31a, a second conveyance unit 31b, and a third conveyance unit 31c sequentially from upstream in the conveyance direction A of the products P. The first conveyance unit 31a to the third conveyance unit 31c are each flat belt conveyors. The first conveyance unit 31a to the third conveyance unit 31c are driven by drive motors disposed under them. The number of the first conveyance unit 31a to the third conveyance unit 31c that the conveyance device 31 has can be appropriately changed in accordance with the dimension of the conveyance device 31, for example.

The first conveyance unit 31a is disposed most upstream in the conveyance direction A. The first conveyance unit 31a takes into the weight checker 30 the products P that are delivered thereto from the bag-making and packaging machine 20 disposed upstream of the weight checker 30. The first conveyance unit 31a conveys the products P in the conveyance direction A and transfers the products P to the second conveyance unit 31b.

The second conveyance unit 31b is disposed between the first conveyance unit 31a and the third conveyance unit 31c in the conveyance direction A. The second conveyance unit 31b conveys the products P in the conveyance direction A and transfers the products P to the third conveyance unit 31c. In the second conveyance unit 31b, the weights of the products P are weighed by the load cell 33 while the products P are conveyed.

The third conveyance unit 31c is disposed most downstream in the conveyance direction A. As shown in FIG. 3, the third conveyance unit 31c has a sorting mechanism 36. The sorting mechanism 36 performs sorting of the products P based on the results of the weighing of the weights of the products P performed by the second conveyance unit 31b.

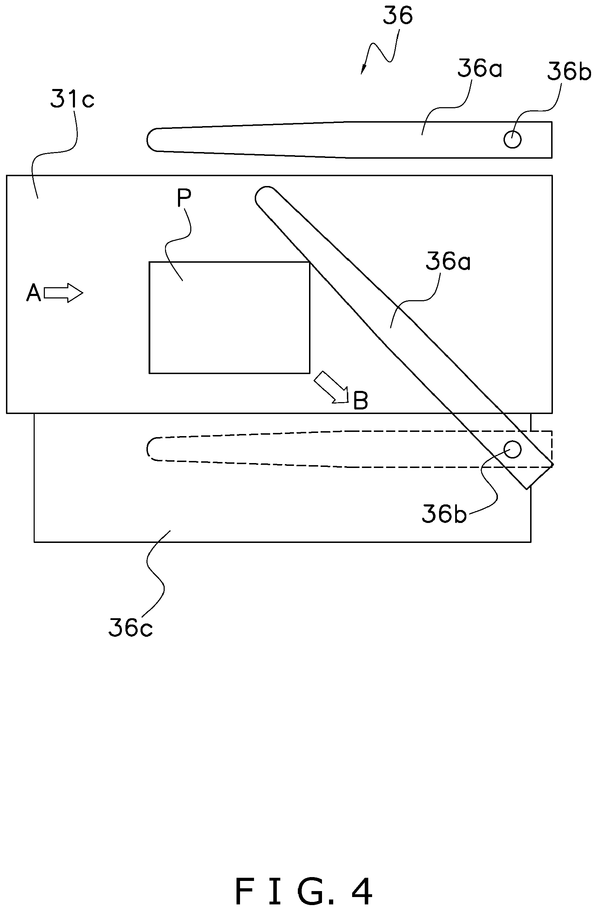

The sorting mechanism 36 has a movable member 36a and an inclined plate 36c. The movable member 36a is a rod-like member that is rotatable about a rotating shaft 36b. The sorting mechanism 36 rotates the movable member 36a about the rotating shaft 36b between a state indicated by the dashed lines and a state indicated by the solid lines in FIG. 4. As shown in FIG. 3, the inclined plate 36c is provided in a position adjacent to the third conveyance unit 31c in a direction orthogonal to the conveyance direction A.

In a case where the weighing results of the products P in the second conveyance unit 31b are in the predetermined range, the sorting mechanism 36 rotates the movable member 36a to the state indicated by the dashed lines in FIG. 4. In this case, the movable member 36a is not positioned over the third conveyance unit 31c. For that reason, the products P (conforming products) conveyed by the third conveyance unit 31c are conveyed along the conveyance direction A without contacting the movable member 36a and are supplied to the downstream seal checker 40.

In a case where the weighing results of the products P in the second conveyance unit 31b are not in the predetermined range, the sorting mechanism 36 rotates the movable member 36a to the state indicated by the solid lines in FIG. 4. In this case, part of the movable member 36a is positioned above the conveyance unit 31c, and the lengthwise direction of the movable member 36a lies along a direction intersecting the conveyance direction A. For that reason, the products P (nonconforming products) conveyed by the third conveyance unit 31c contact the movable member 36a and are prevented from being conveyed in the conveyance direction A. As a result, the products P are conveyed in the lengthwise direction of the movable member 36a along a discharge direction B intersecting the conveyance direction A. Thereafter, the products P that have been guided outside the third conveyance unit 31c by the movable member 36a move on the inclined plate 36c and are discharged from the production line of the production system 100.

### (2-2) Load Cell 33

The load cell 33 weighs the weights of the products P that are conveyed by the conveyance device 31. The load cell 33 detects changes in strain that occur when the products P are placed on the second conveyance unit 31b and weighs the weights of the products P that have been placed on the second conveyance unit 31b.

### (2-3) Support 35

The support 35 has a support body 35a and a base 35b. The support body 35a is a member that extends upward from the base 35b. The support body 35a supports the conveyance device 31, the load cell 33, the touch panel 37, the control unit 39 and the like. The base 35b is a U-shaped member that supports the support body 35a. The base 35b has four legs 35c that project downward.

### (2-4) Touch Panel 37

The touch panel 37 is a display device attached to the support 35. The touch panel 37 is used for the user of the weight checker 30 to operate the weight checker 30. The touch panel 37 displays information relating to the operation and status of the weight checker 30 on a screen. The touch panel 37 receives requests to change parameters (hereinafter called "operating parameters") relating to the operation of the weight checker 30. The change requests correspond to the user of the weight checker 30 performing, with respect to the touch panel 37, an operation to change the operating parameters. Specifically, the user of the weight checker 30 operates the touch panel 37 to input changed values for the operating parameters, and the touch panel 37 acquires the values that the user of the weight checker 30 has input. The touch panel 37 sends to the control unit 39 signals relating to the requests to change the operating parameters that it received. The operation of using the touch panel 37 to change the operating parameters is described later.

### (2-5) Control Unit 39

The control unit 39 is electrically connected to, and controls the operations of, the conveyance device 31, the load cell 33, the sorting mechanism 36, and the touch panel 37. For example, the control unit 39 controls the drive motors that drive the first conveyance unit 31a to the third conveyance unit 31c to control, for example, the speed at which the products P are conveyed in the conveyance device 31. Furthermore, the control unit 39 controls the sorting mechanism 36 to rotate the movable member 36a about the rotating shaft 36b. Furthermore, the control unit 39 manages data that are displayed on the touch panel 37 and data that the user of the weight checker 30 has input to the touch panel 37. The control unit 39 receives, from the touch panel 37, the signals relating to the requests to change the operating parameters that the touch panel 37 received.

The control unit 39 has a CPU and a memory (ROM, RAM, etc.). The control unit 39 controls the conveyance device 31, the load cell 33, and the touch panel 37 as a result of the CPU executing a program stored in the memory. The various functions of the control unit 39 are not limited to being realized by software and may also be realized by hardware or by hardware and software working together.

### (3) Operation of Weight Checker 30

The control unit 39 determines whether or not the operating parameters after the changes pertaining to the requests to change the operating parameters that the touch panel 37 received are in predetermined allowable ranges. Hereinafter, the operating parameters after the changes pertaining to the change requests from the user of the weight checker 30 (hereinafter simply called "the user") and which become the objects of the determination by the control unit 39 will be called "determination object parameters." In accordance with the determination results of the determination object parameters, the control unit 39 outputs predetermined determination information or decides whether or not to change the operating parameters based on the change requests. That is, when requests to change the operating parameters are made, the control unit 39, before causing the weight checker 30 to reflect the operating parameters after the changes pertaining to the change requests, determines whether or not the operating parameters after the changes pertaining to the change requests are appropriate.

The allowable ranges of the operating parameters are set based on at least one of conditions permitted for the weight checker 30 and conditions relating to the checks by the weight checker 30.

The conditions permitted for the weight checker 30 correspond, for example, to setting conditions in a case where the weight checker 30 must be used under setting conditions prescribed by test results of an official inspection performed after installation due to provisions of law such as the Measurement Act.

The conditions relating to the checks by the weight checker 30 are conditions prescribed based on internal rules such as the yield of the production line of the production system 100. For example, the manager of the production system 100 sets the allowable ranges of the operating parameters based on, for example, operating history data of the production system 100 so that the yield of the production line is in a predetermined range.

The operating parameters that the user can change include, for example, at least one of the speed at which the conveyance device 31 conveys the products P and the range of the weights that the load cell 33 is capable of weighing. The speed at which the conveyance device 31 conveys the products P specifically is the speed of each of the conveyors of the first conveyance unit 31a to the third conveyance unit 31c. The weight that the load cell 33 is capable of weighing is a standard value of the weights (hereinafter called "the weight standard value") of the products P that are the object of the checking by the weight checker 30. However, the operating parameters are not limited to these and can include one or plural arbitrary parameters relating to the operation of the weight checker 30.

Below, the operating parameters will include at least the weight standard value. In a case where the weighed values of the weights of the products P are in the predetermined range including the weight standard value, the weight checker 30 determines that those products P are conforming products. In a case where the weighed values of the weights of the products P are not in the predetermined range including the weight standard value, the weight checker 30 determines that those products P are nonconforming products.

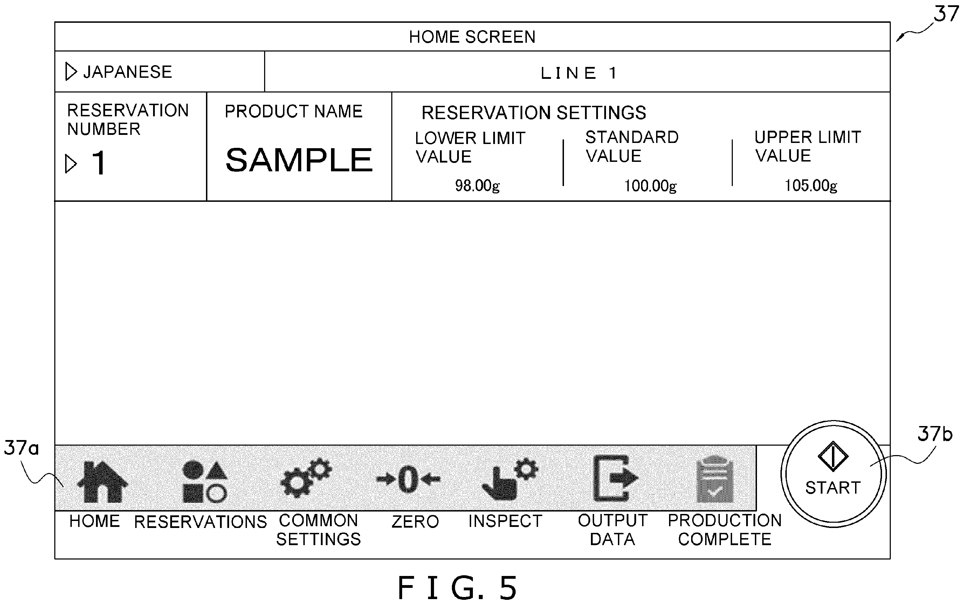

The procedure in which the user operates the touch panel 37 to change the operating parameter will now be described with reference to the drawings. FIGS. 5 to 14 show examples of screens displayed on the touch panel 37. In the lower portions of these screens, a toolbar 37a and a start button 37b are displayed as common display content. In the toolbar 37a, icons representing various functions that the user can use are displayed in a row. The user can start the operation of the weight checker 30 by touching the start button 37b. At least some of the icons in the toolbar 37a and the start button 37b are sometimes disabled depending on the status of the weight checker 30. For example, while the user is setting the weight standard value as described later, the start button 37b is disabled so that the user cannot start the operation of the weight checker 30. The start button 37b may also be an interface for starting the production line of the production system 100.

FIG. 5 shows a home screen. By touching a "Home" icon in the toolbar 37b, the home screen of FIG. 5 is displayed on the touch panel 37. On the home screen, for example, a currently set "Reservation Number" and a "Product Name" and "Reservation Settings" associated with that reservation number are displayed. The control unit 39 stores a product name and reservation settings per each reservation number. By setting the reservation number, the user can call up the product name and reservation settings associated with that reservation number. The reservation settings are various types of setting information including the operating parameters. On the home screen of FIG. 5, some setting information is displayed as the reservation settings. The user, for example, can register new reservation numbers, product names, and reservation settings on a screen that is displayed upon touching a "Reservations" icon in the toolbar 37a. In this case, the new reservation number may be designated by the user or may be automatically allocated by the control unit 39.

The "Product Name" shown in FIG. 5 is the name of the products P. The "Reservation Settings" shown in FIG. 5 are "Lower Limit Value," "Standard Value," and "Upper Limit Value." The "Standard Value" is the weight standard value that is an operating parameter. The "Lower Limit Value" and the "Upper Limit Value" are the lower limit value and the upper limit value, respectively, of the predetermined range including the weight standard value that the weight checker 30 uses to check the weights of the products P. That is, in a case where the weighed values of the weights of the products P are in the predetermined range from the "Lower Limit Value" to the "Upper Limit Value" of FIG. 5, the weight checker 30 determines that those products P are conforming products. Although it is not shown in FIG. 5, other information relating to the operation and status of the weight checker 30 may also be displayed on the home screen.

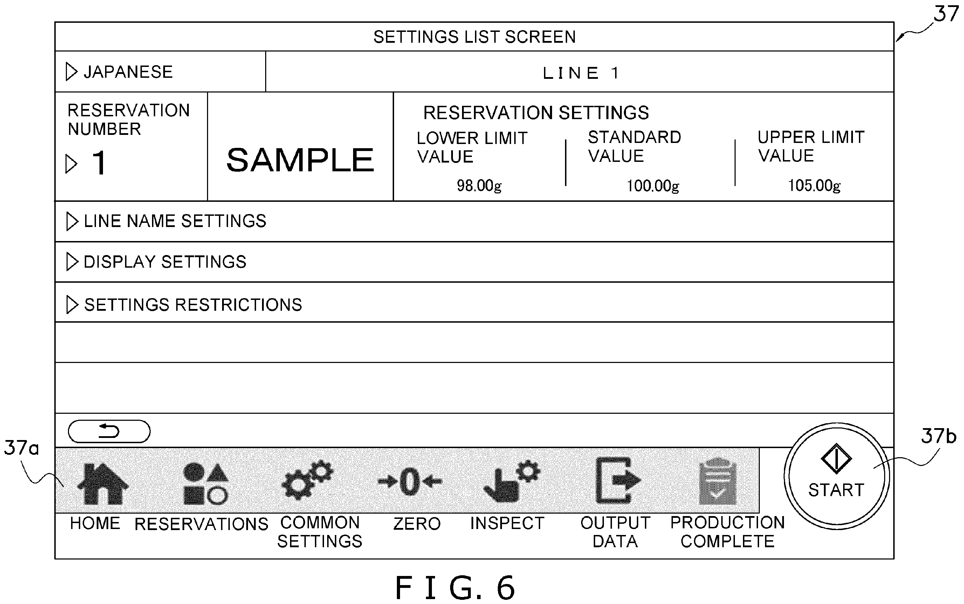

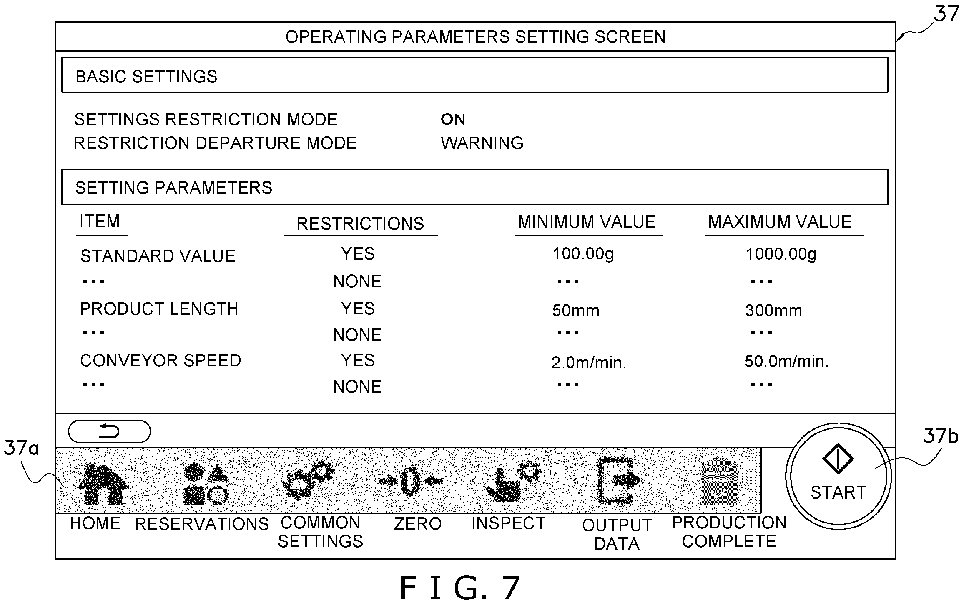

FIG. 6 shows a settings list screen. FIG. 7 shows an operating parameter setting screen. By touching a "Common Settings" icon in the toolbar 37a, the settings list screen of FIG. 6 is displayed on the touch panel 37. On the settings list screen, a list of items that are settable by the user is displayed. The settings list screen includes, for example, "Display Settings," which are settings relating to the display of the touch panel 37. By touching "Settings Restrictions" in FIG. 6, the operating parameter setting screen of FIG. 7 is displayed on the touch panel 37.

On the operating parameter setting screen of FIG. 7, items that are settable in relation to the operation of the weight checker 30 and values that are currently set for each item are displayed. In FIG. 7, in addition to "Settings Restriction Mode" and "Restriction Departure Mode," "Restrictions," "Minimum Value," and "Maximum Value" of each operating parameter are displayed as the settable items. In FIG. 7, "Standard Value," "Product Length," and "Conveyor Speed" are displayed as the operating parameters. The "Standard Value" is the weight standard value. The "Product Length" is the length of the products P in the conveyance direction A. The "Conveyor Speed" is the speed at which the products P are conveyed along the conveyance direction A in the conveyance device 31 (the speed of the conveyors of the first conveyance unit 31a to the third conveyance unit 31c). By touching the settable items on the screen of FIG. 7, screens for setting the touched items are displayed on the touch panel 37. For example, by touching "Settings Restriction Mode," a "Settings Restriction Mode" setting screen is displayed on the touch panel 37. The operating parameter setting screen normally is not operated by the user but rather is operated by the manager of the production system 100, for example. Next, the settable items shown in FIG. 7 are described.

The "Settings Restriction Mode" relates to restrictions on the operating parameters. The value of the "Settings Restriction Mode" is either "ON" or "OFF." In a case where the value is "ON," a restricted mode that restricts the ranges of the operating parameters is enabled. In a case where the value is "OFF," the restricted mode is disabled. The restricted mode is a mode by which it is determined whether or not the determination object parameters are in the predetermined allowable ranges. That is, when the restricted mode is enabled, the control unit 39 determines whether or not the operating parameters (determination object parameters) after the changes pertaining to the change requests from the user are appropriate.

The "Restriction Departure Mode" relates to behavior when the determination object parameters are outside the predetermined allowable ranges in a case where the value of the "Settings Restriction Mode" is "ON." In other words, the "Restriction Departure Mode" relates to processing in a case where it has been determined that the determination object parameters are not in the predetermined allowable ranges. The value of the "Restriction Departure Mode" is either "Prohibited" or "Warning." In a case where the value is "Prohibited," changes to the operating parameters relating to the change requests are restricted; for example, setting operating parameters that are outside the predetermined allowable ranges is itself prohibited. In this case, the start button 37b is disabled, and starting the operation of the weight checker 30 is also prohibited. In a case where the value is "Warning," determination information relating to the determination results of the determination object parameters is output. The determination information is, for example, information indicating that operating parameters that are outside the predetermined allowable ranges have been set. Specifically, in a case where the value is "Warning," a warning indicating that changing the operating parameters pertaining to the change requests is not appropriate is displayed on the touch panel 37. The warning may be a display of predetermined words on the touch panel 37 and/or a warning by means of sound or light.

The "Restrictions" of each operating parameter relate to whether or not there is a restriction on the operating parameter. The value for "Restrictions" is either "NONE" or "YES." In a case where the value is "NONE," the setting range (allowable range) of the operating parameter is not restricted. In a case where the value is "YES," the setting range of the operating parameter is restricted. The value for "Restrictions" are settable per each operating parameter, but it may also be settable collectively in regard to arbitrary types of the operating parameters.

The "Minimum Value" and the "Maximum Value" of each operating parameter relate to the setting ranges (allowable ranges) of the operating parameters in a case where the value of the corresponding "Restrictions" is "YES." The values of the "Minimum Value" and the "Maximum Value" in FIG. 7 correspond to the lower limit values and the upper limit values, respectively, of the allowable ranges used to determine the determination object parameters.

The "Minimum Value" and the "Maximum Value" of the operating parameters on the operating parameter setting screen of FIG. 7 are settable in ranges that are settable based on the specifications of the weight checker 30. For example, the "Minimum Value" and the "Maximum Value" of the weight standard value, which is one of the operating parameters, are settable in a maximum range (e.g., 2.00 g to 2995.00 g) that is settable based on the specifications of the load cell 33.

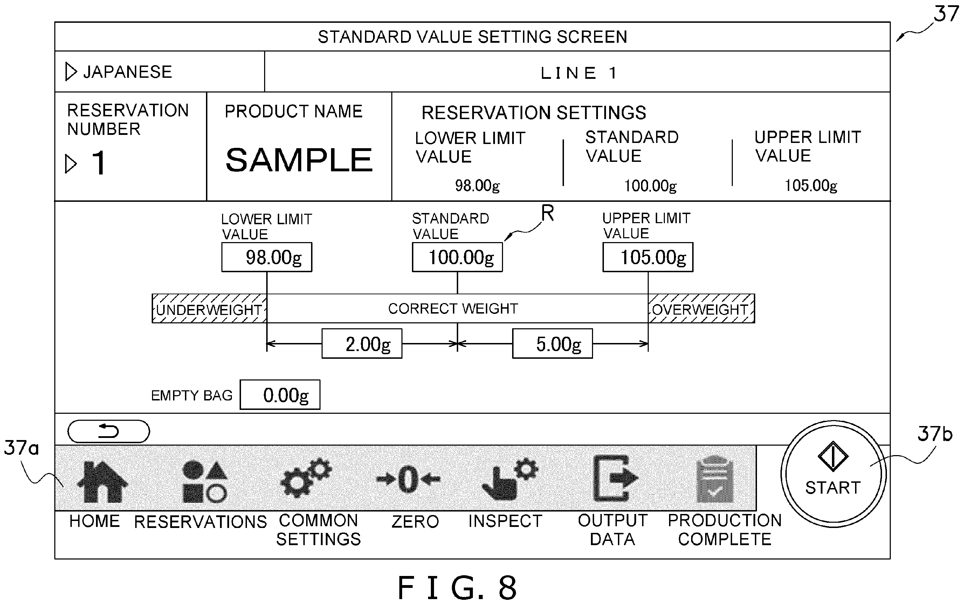

Next, the procedure in which the user changes the weight standard value, which is one of the operating parameters, is described. FIG. 8 shows a standard value setting screen. For example, by performing a predetermined operation on the settings list screen shown in FIG. 6, the standard value setting screen is displayed on the touch panel 37. On the standard value setting screen, a parameter with the same meaning as the "Lower Limit Value," the "Standard Value," and the "Upper Limit Value" shown in FIG. 5 is displayed in the form of a number line. The range between the lower limit value and the upper limit value (the range including the lower limit value and the upper limit value) is called "Correct Weight." When the weighed values of the weights of the products P are in the range of the "Correct Weight," the weight checker 30 determines that the products P are conforming products. The range below the lower limit value and the range above the upper limit value are called "Underweight" and "Overweight," respectively. When the weighed values of the weights of the products P are in the "Underweight" or "Overweight" ranges, the weight checker 30 determines that the products P are nonconforming products. In FIG. 8, the "Lower Limit Value," the "Standard Value," and the "Upper Limit Value" are set to 98.00 g, 100.00 g, and 105.00 g, respectively. In FIG. 8, the difference (2.00 g) between the "Lower Limit Value" and the "Standard Value" and the difference (5.00 g) between the "Standard Value" and the "Upper Limit Value" are shown. The "Lower Limit Value" and the "Upper Limit Value" may be set automatically based on the "Standard Value," or may be set by the user. In a case where the user sets the "Lower Limit Value" and the "Upper Limit Value", the settable range may be decided beforehand. On the standard value setting screen, other information such as the weight of only the bags of the products P (the weight of the empty bags) is also displayed.

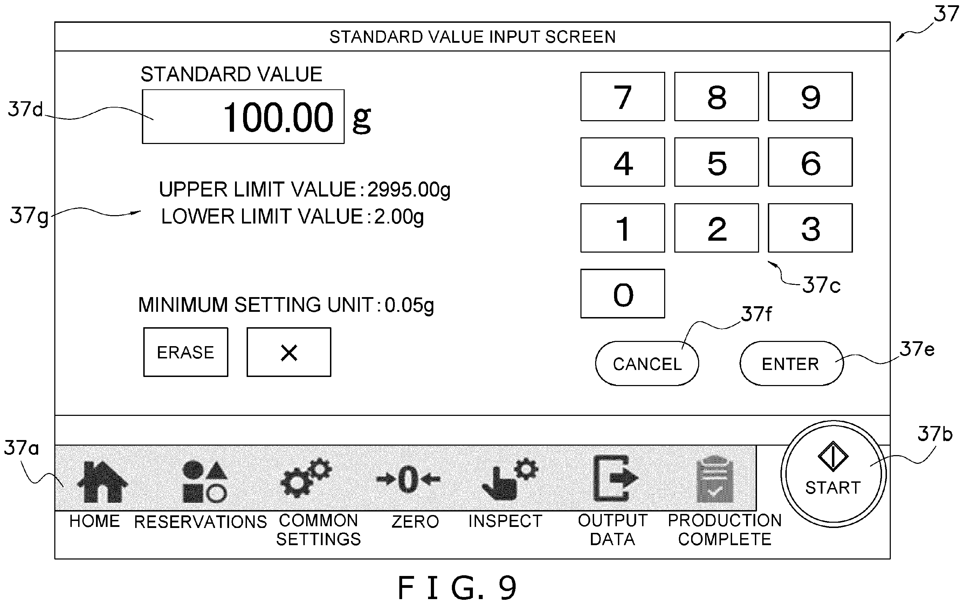

Next, the procedure in which the user changes the "Standard Value (Weight Standard Value)" according to the values of the "Settings Restriction Mode" and the "Restriction Departure Mode" of FIG. 7 is described. FIG. 9 to FIG. 11 show a standard value input screen for changing the "Standard Value." For example, by touching region R, in which the value of the standard value on the number line is displayed, on the standard value setting screen shown in FIG. 8, the standard value input screen is displayed on the touch panel 37.

The standard value input screen includes a ten-key pad 37c, an input field 37d, an enter button 37e, a cancel button 37f, and a range display area 37g. The ten-key pad 37c is an interface for the user to input numerical values by touch. The input field 37d is an area in which is displayed the standard value after the change that has been input by touching the ten-key pad 37c. When the user inputs a standard value and touches the enter button 37e, the request to change the standard value is received by the touch panel 37. When the user touches the cancel button 37f, the touch panel 37 returns to the standard value setting screen of FIG. 8. In the range display area 37g, information relating to the settable range of the standard value is displayed.

### (3-1) Settings Restriction Mode: OFF

FIG. 9 shows the standard value input screen in a case where the value of the "Settings Restriction Mode" of FIG. 7 is "OFF." In this case, the upper limit value and the lower limit value of the settable range of the standard value are the same as the upper limit value and the lower limit value, respectively, of the maximum range that is settable based on the specifications of the load cell 33. In FIG. 9, the upper limit value (2995.00 g) and the lower limit value (2.00 g) of the settable range are displayed in the range display area 37g. The user can change the standard value in the settable range (2.00 g to 2995.00 g).

When the user touches the start button 37b on the home screen, for example, in a case where the value of the "Settings Restriction Mode" is "OFF," the operation of the weight checker 30 starts. At this time, the weight checker 30 does not perform a special operation such as a warning.

### (3-2) Settings Restriction Mode: ON, Restriction Departure Mode: Prohibited

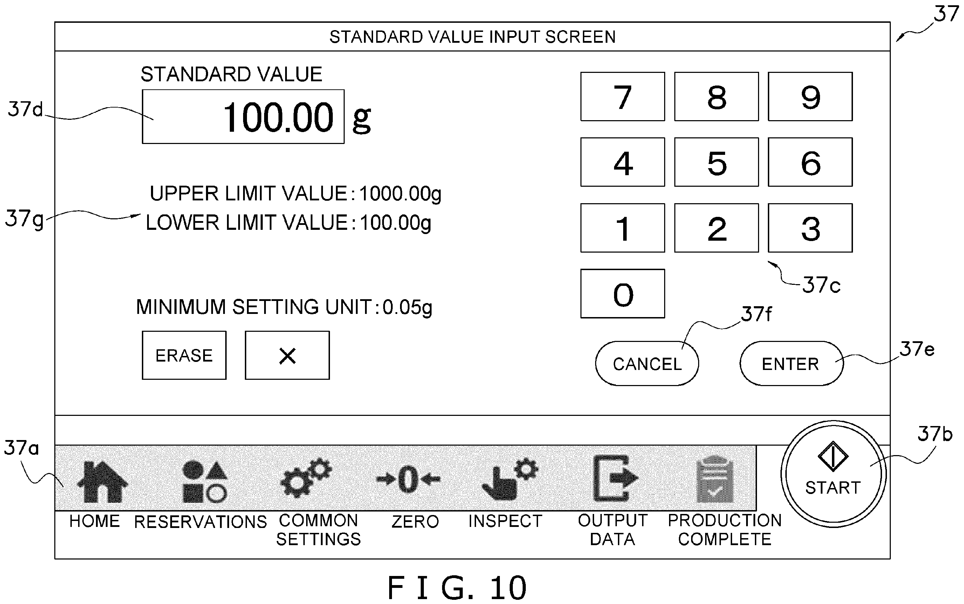

FIG. 10 shows the standard value input screen in a case where the value of the "Settings Restriction Mode" of FIG. 7 is "ON" and the value of the "Restriction Departure Mode" is "Prohibited." In this case, the upper limit value and the lower limit value of the settable range of the standard value are the same as the "Maximum Value" and the "Minimum Value," respectively, that have been set on the operating parameter setting screen of FIG. 7. In FIG. 10, the upper limit value (1000.00 g) and the lower limit value (100.00 g) of the settable range are displayed in the range display area 37g. This settable range is the allowable range used to determine the determination object parameter. The user can change the standard value in the allowable range (100.00 g to 1000.00 g). The control unit 39 prohibits changes to the standard value in a case where it has determined that the standard value (determination object parameter) that the user has input is not in the allowable range.

In a case where, due to other conditions, the settable range of the standard value is smaller than the range based on the "Maximum Value" and the "Minimum Value" that have been set on the operating parameter setting screen of FIG. 7, the smaller range is employed as the allowable range.

When the user touches the start button 37b on the home screen, for example, in a case where the value of the "Settings Restriction Mode" is "ON" and the value of the "Restriction Departure Mode" is "Prohibited," the operation of the weight checker 30 starts. At this time, the weight checker 30 does not perform a special operation such as a warning.

### (3-3) Settings Restriction Mode: ON, Restriction Departure Mode: Warning

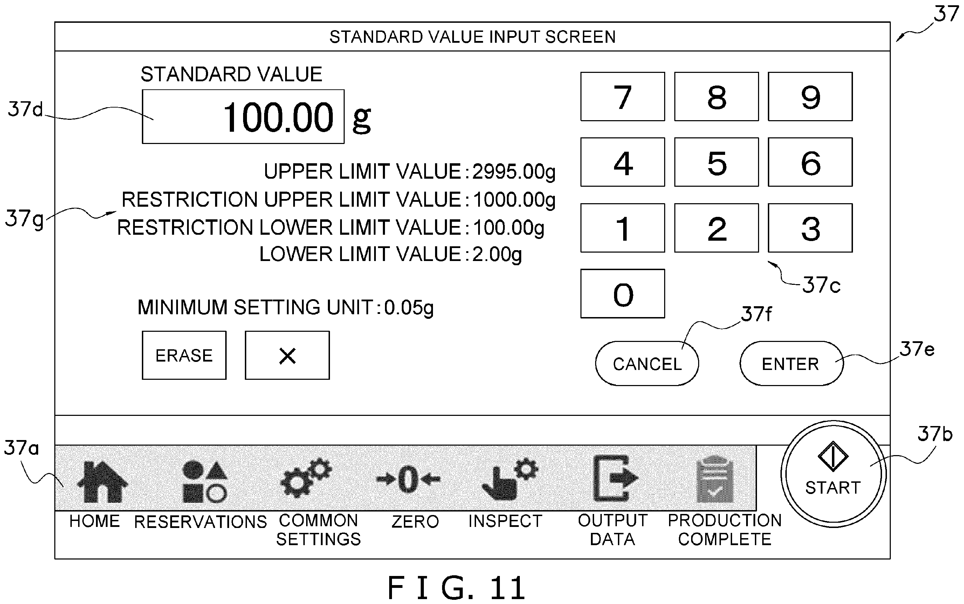

FIG. 11 shows the standard value input screen in a case where the value of the "Settings Restriction Mode" of FIG. 7 is "ON" and the value of the "Restriction Departure Mode" is "Warning." In FIG. 11, the four values of "Upper Limit Value," "Restriction Upper Limit Value," "Restriction Lower Limit Value," and "Lower Limit Value" are displayed in the range display area 37g. In this case, the upper limit value and the lower limit value of the settable range of the standard value are the same as the upper limit value and the lower limit value, respectively, of the maximum range that is settable based on the specifications of the load cell 33. The restriction upper limit value and the restriction lower limit value of the settable range of the standard value are the same as the "Maximum Value" and the "Minimum Value," respectively, that have been set on the operating parameter setting screen of FIG. 7. The range from the restriction lower limit value to the restriction upper limit value is smaller than the range from the lower limit value to the upper limit value. In FIG. 11, the upper limit value (2995.00 g), the restriction upper limit value (1000.00 g), the restriction lower limit value (100.00 g), and the lower limit value (2.00 g) of the settable range are displayed in the range display area 37g. The user can change the standard value in the range from the lower limit value to the upper limit value (2.00 g to 2995.00 g) of the settable range. The range from the restriction lower limit value to the restriction upper limit value of the settable range is the allowable range used to determine the determination object parameter. In a case where the control unit 39 has determined that the standard value (determination object parameter) that the user has input is not in the allowable range (100.00 g to 1000.00 g), the weight checker 30 performs a special operation such as a warning.

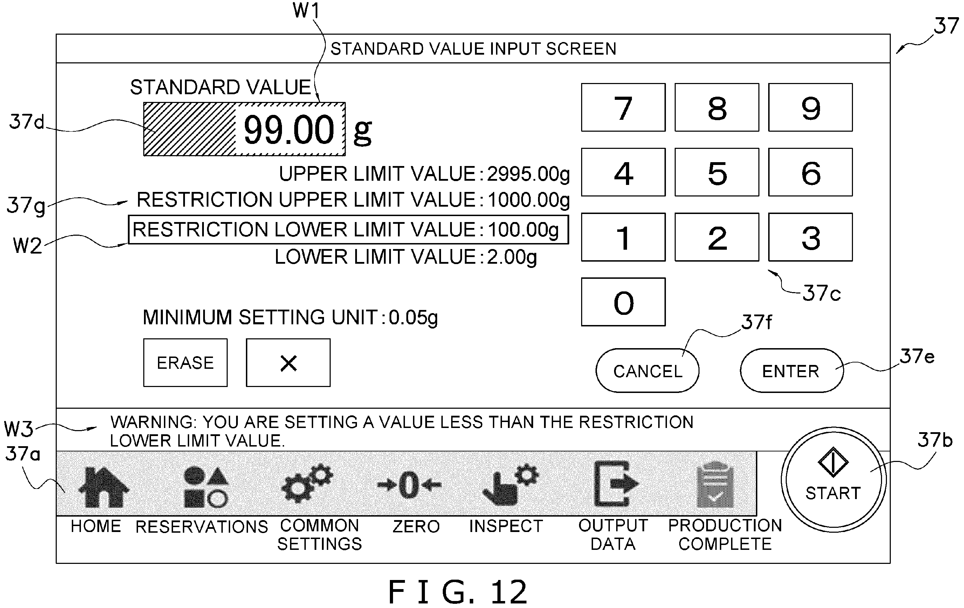

In a case where a standard value that is not in the allowable range from the restriction lower limit value to the restriction upper limit value (100.00 g to 1000.00 g) has been input on the standard value input screen of FIG. 11, a predetermined warning is displayed on the touch panel 37. In FIG. 12, three types of warnings W1 to W3 are displayed. The first warning W1 is a warning where the value input for the standard value displayed in the input field 37d is displayed in a way that is different from normal. "Displayed in a way that is different" means displayed in a color, font, or font size that is different from normal. In FIG. 12, the first warning W1 is displayed as a result of the input field 37d being hatched. The second warning W2 is a warning where, of the restriction upper limit value and the restriction lower limit value displayed in the range display area 37g, the value from which the value input for the standard value displayed in the input field 37d departs is displayed in a way that is different from normal. In the case of FIG. 12, the value (99.00 g) input for the standard value is below the restriction lower limit value, so the restriction lower limit value in the range display area 37g is displayed in a way that is different from normal. In FIG. 12, the second warning W2 is displayed as a result of the item of the restriction lower limit value in the range display area 37g being framed. The third warning W3 is a warning where, as shown in FIG. 12, words indicating that the value input for the standard value displayed in the input field 37d is outside the restriction upper limit value or the restriction lower limit value are displayed. In the screen of FIG. 12, it suffices that at least one of plural types of warnings including the three types of warnings W1 to W3 is displayed.

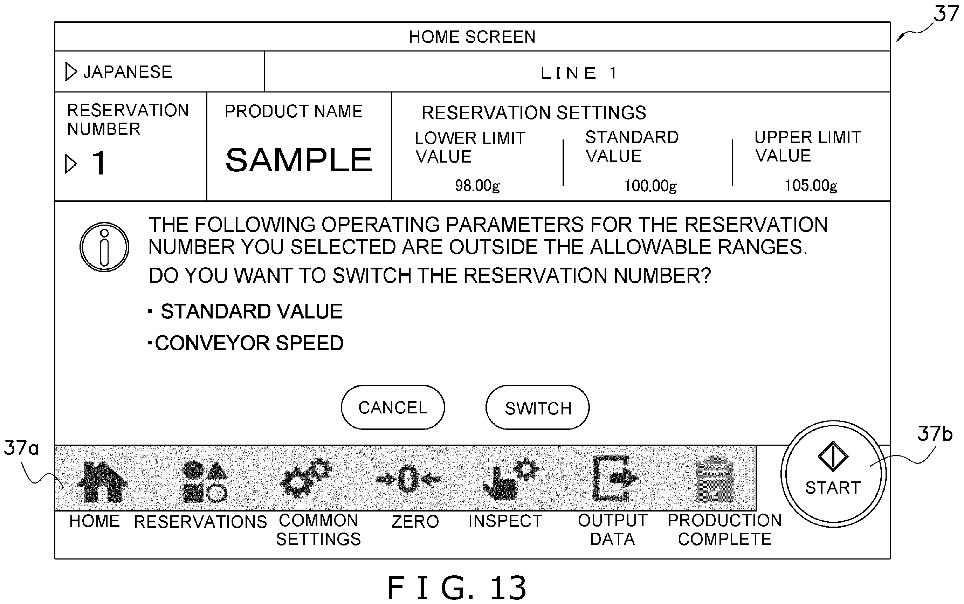

When the user switches the reservation number in a case where the value of the "Settings Restriction Mode" is "ON" and the value of the "Restriction Departure Mode" is "Warning," if there is an operating parameter that is outside the allowable range among the operating parameters included in the reservation settings corresponding to the reservation number to which the user has switched, that operating parameter is displayed on the touch panel 37. FIG. 13 is a screen that displays a list of operating parameters that are outside the allowable ranges in the reservation number to which the user has switched. At this time, the user can perform an operation to touch a "Switch" button and further switch the reservation number or touch a "Cancel" button and return the reservation number to what it was before. In this case, words and an icon indicating that there is an operating parameter that is outside the allowable range may also be displayed as a warning on the home screen of FIG. 5, for example.

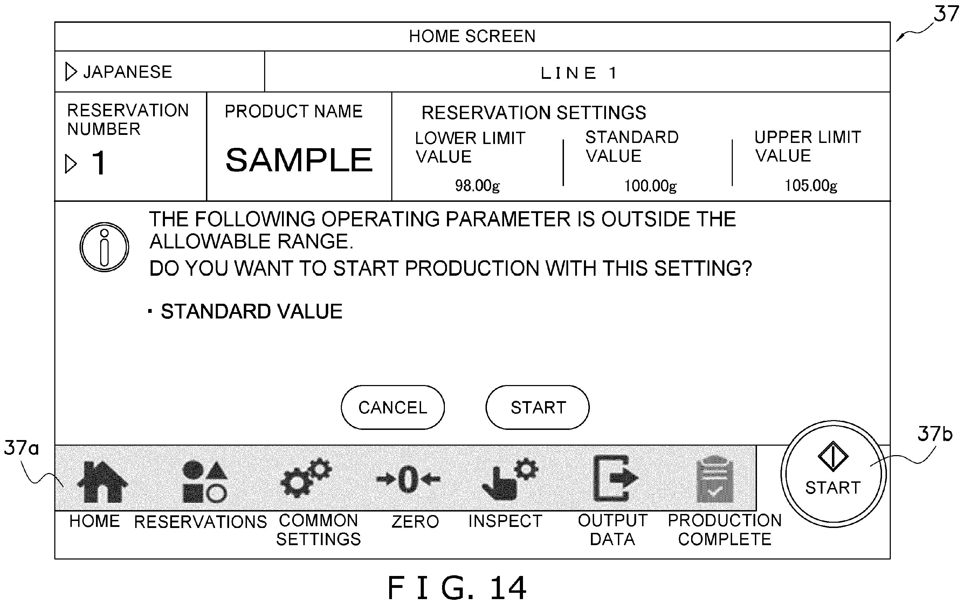

When the user touches the start button 37b in a case where the value of the "Settings Restriction Mode" is "ON" and the value of the "Restriction Departure Mode" is "Warning," the operation of the weight checker 30 is started. At this time, if there is an operating parameter that is outside the allowable range among the operating parameters included in the reservation settings corresponding to the currently set reservation number, that operating parameter is displayed on the touch panel 37. FIG. 14 is a screen that displays a list of operating parameters that are outside the allowable ranges at the start of the operation of the weight checker 30. At this time, the user can touch the "Start" button to start the operation of the weight checker 30 or touch the "Cancel" button to cancel the operation of the weight checker 30.

### (4) Characteristics

### (4-1)

The weight checker 30 of this embodiment determines, when the user changes the operating parameters relating to the operation of the weight checker 30, whether or not the values after the changes to the operating parameters are in the predetermined allowable ranges. In accordance with the determination results, the weight checker 30 outputs the predetermined determination information or decides whether or not to change the operating parameters. For example, in a case where the values after the changes to the operating parameters are outside the allowable ranges, the weight checker 30 can notify the user of a warning to that effect and/or prohibit the changes to the operating parameters.

For that reason, the user of the weight checker 30 can appropriately carry out settings relating to the operation of the weight checker 30. Consequently, the weight checker 30 can ensure that the setting of the operating parameters by the user is appropriately carried out.

### (4-2)

In a case where the ranges of the operating parameters that are settable in terms of the specifications of the weight checker 30 are different from the ranges of the operating parameters prescribed by test results of an official inspection performed after installation due to provisions of law such as the Measurement Act, there is the concern that the user will set operating parameters that are outside the ranges prescribed by the test results of the official inspection. However, in a case where the allowable ranges of the operating parameters are set based on the conditions permitted for the weight checker 30, the weight checker 30 can prevent an unintended violation of law by the user by using the allowable ranges that are based on the conditions permitted for the weight checker 30.

Furthermore, in a case where the allowable ranges of the operating parameters are set based on the conditions relating to the checks by the weight checker 30, the weight checker 30 can allow the production line of the production system 100 to operate in the predetermined conditions. For example, by using the allowable ranges that the manager of the production system 100 has set based on conditions prescribed based on internal rules such as the yield of the production line of the production system 100, the weight checker 30 can allow the production line to operate in the range of the predetermined yield.

### (5) Example Modifications

Example modifications of the above embodiment are described below. It will be noted that some or all of the content of each example modification may also be combined with the content of another example modification to the extent that they are not incompatible with each other.

### (5-1) Example Modification A

In the weight checker 30 of the above embodiment, the control unit 39 determines whether or not the determination object parameters are in the predetermined allowable ranges. The allowable ranges can be set by changing the "Maximum Value" and the "Minimum Value" of the operating parameters on the operating parameter setting screen of FIG. 7. However, the control unit 30 may also automatically set the allowable ranges based on at least one of the conditions permitted for the weight checker 30 and the conditions relating to the checks by the weight checker 30. In this case, the weight checker 30 can appropriately set the allowable ranges of the operating parameters.

### (5-2) Example Modification B

When determining the determination object parameters, the control unit 39 may also, in a case where the determination object parameters are not in the allowable ranges, associate and store, with the determination results, an indication that the determination object parameters are not in the allowable ranges. Specifically, the control unit 39 records data relating to the requests to change the operating parameters each time the user of the weight checker 30 performs a procedure to change the operating parameters. The data relating to the change requests are, for example, the determination object parameters, the times when the change requests were made, and the determination results. The determination results are, for example, information relating to whether or not the determination object parameters are outside the allowable ranges.

The weight checker 30 of this example modification can, in a case where the user has tried to change the operating parameters, automatically record information relating to the operating parameters that the user tried to change. For that reason, the manager of the production system 100 can, for example, set beforehand appropriate allowable ranges of the operating parameters based on the information that the weight checker 30 has recorded.

### (5-3) Example Modification C

The touch panel 37 may also receive requests to change at least some of the operating parameters per each type of the products P. In this case, the user can change the operating parameters per each type of the products P on the operating parameter setting screen of FIG. 7.

### (5-4) Example Modification D

The control unit 39 may also automatically decide the allowable ranges of the operating parameters based on results of a test run performed after installation of the weight checker 30. In this case, the weight checker 30 can appropriately set the allowable ranges of the operating parameters.

### (5-5) Example Modification E

In a case where a standard value that is not in the allowable range from the restriction lower limit value to the restriction upper limit value (100.00 g to 1000.00 g) has been input on the standard value input screen of FIG. 11, the predetermined warning is displayed on the touch panel 37 as shown in FIG. 12.

However, the control unit 39 may also notify the user, by means of sound, of the predetermined warning in addition to displaying the predetermined warning on the touch panel 37 or instead of displaying the predetermined warning on the touch panel 37. For example, the control unit 39 may playback a sound relating to the warning from a buzzer or a speaker built into or connected to the weight checker 30. The sound relating to the warning is, for example, a warning sound emitted from the buzzer or voice guidance emitted from the speaker.

In this example modification, for example, when the user inputs a standard value that is not in the allowable range from the restriction lower limit value to the restriction upper limit value (100.00 g to 1000.00 g) on the standard value input screen of FIG. 11, the predetermined warning is displayed on the touch panel 37 and a sound relating to the predetermined warning is played back.

Furthermore, in a case where the "Minimum Value" and the "Maximum Value" of the operating parameter were not set in the range that is settable based on the specifications of the weight checker 30 on the operating parameter setting screen of FIG. 7, the control unit 39 may also display the predetermined warning on the touch panel 37 and/or notify the user by means of sound.

### INDUSTRIAL APPLICABILITY

The weight checking device pertaining to this invention ensures that the user can appropriately carry out settings relating to the operation of the device.

### REFERENCE SIGNS LIST

- 30: Weight Checker (Weight Checking Device)
- 31: Conveyance Device (Conveyance Unit)
- 33: Load Cell (Weighing Unit)
- 37: Touch Panel (Receiving Unit)
- 39: Control Unit
- P: Products (Articles-to-be-checked)

### CITATION LIST

### PATENT LITERATURE

Patent Document 1: JP-ANo. 2006-322750

## Claims

1. A weight checking device for performing a check relating to a weight of an article-to-be-checked, the weight checking device comprising:
a weighing unit configured to weigh the weight of the article-to-be-checked;
a receiving unit configured to receive a change request of a parameter relating to an operation of the weight checking device; and
a control unit configured to:
determine, based on at least one of a condition permitted for the weight checking device and a condition relating to the check, whether or not the parameter after a change pertaining to the change request is in a predetermined allowable range and,
in accordance with the determination result, output predetermined determination information or decide whether or not to change the parameter based on the change request.

2. The weight checking device of claim 1, wherein
the condition permitted for the weight checking device is a condition specified by a provision of a law.

3. The weight checking device of claim 1 or 2, wherein
in a case where the parameter after the change pertaining to the change request is not in the allowable range, the control unit is configured to output the determination information including a warning.

4. The weight checking device of any one of claims 1 to 3, wherein
in a case where the parameter after the change pertaining to the change request is not in the allowable range, the control unit is configured to associate and store, with the determination result, an indication that the parameter after the change pertaining to the change request is not in the allowable range.

5. The weight checking device of any one of claims 1 to 4, wherein
in a case where the parameter after the change pertaining to the change request is not in the allowable range, the control unit is configured to restrict the change to the parameter pertaining to the change request.

6. The weight checking device of any one of claims 1 to 5, further comprising:
a conveyance unit configured to convey the article-to-be-checked in a predetermined direction,
wherein the receiving unit is configured to receive a change request of the parameter including at least one of a speed at which the conveyance unit conveys the article-to-be-checked and the range of the weight that the weighing unit is capable of weighing.

7. The weight checking device of any one of claims 1 to 6, wherein
the receiving unit is configured to receive a change request of at least some of the parameter per each type of the article-to-be-checked.

8. The weight checking device of any one of claims 1 to 7, wherein
the control unit is configured to decide the allowable range based on a result of a test run performed after installation of the weight checking device.
